# EUROPÄISCHE PATENTANMELDUNG

(11) **EP 3 006 795 A1**
(43) Veröffentlichungstag der Anmeldung: **13.04.2016**
(21) Anmeldenummer: 15174896.9
(22) Anmeldetag: 01.07.2015
(51) Int. Cl.: F16K 17/06, F16K 31/00, G05D 23/12, G05D 23/02

(54) **VENTILANORDNUNG**

(30) Priorität: 17.07.2014 DE 102014213938
(71) Anmelder: Joma-Polytec GmbH, 72411 Bodelshausen (DE)
(72) Erfinder: Heinz, Stefan, 72411 Bodelshausen (DE); Diehl, Benjamin, 72116 Mössingen (DE); Bulach, Sven, 72379 Hechingen (DE)
(74) Vertreter: DREISS Patentanwälte PartG mbB

(57) **Zusammenfassung**

Ventilanordnung (10) mit einer von einem Druckmedium anströmbaren Druckseite (38), und mit einem zwischen einer Schließstellung und einer Öffnungsstellung verlagerbaren Ventilkörper (12), dadurch gekennzeichnet, dass der Ventilkörper (12) einen der Druckseite (38) zugewandten ersten Kolben (26) und einen der Druckseite (38) abgewandten, mit dem ersten Kolben (26) einen Zwischenraum (46) begrenzende zweiten Kolben (28) aufweist, wobei die Kolbenfläche des zweiten Kolbens (28) größer ist als die Kolbenfläche des ersten Kolbens (26), dass bei Überschreiten eines an der Druckseite vorherrschenden oberen Grenzdrucks (P₂) der Ventilkörper (12) in die Öffnungsstellung verlagert wird, und dass ein temperaturabhängig schaltendes Stellglied (48) vorgesehen ist, das bei Überschreiten einer an der Druckseite (38) vorherrschenden Grenztemperatur die Druckseite (38) mit dem Zwischenraum (46) verbindet, so dass das Druckmedium auf den zweiten Kolben (28) wirkt und der Ventilkörper (12) bei Überschreiten eines geringeren, unteren Grenzdrucks (P₁) geöffnet wird.

## Beschreibung

Die Erfindung betrifft eine Ventilanordnung mit einer von einem Druckmedium anströmbaren Druckseite, und mit einem zwischen einer Schließstellung und einer Öffnungsstellung verlagerbaren Ventilkörper. Die Erfindung betrifft auch ein Verfahren zum Betreiben einer derartigen Ventilanordnung.

Derartige Ventilanordnungen sind in vielfältiger Art und Weise bekannt, beispielsweise als Überdruckventil oder Rückschlagventil.

Der vorliegenden Erfindung liegt die Aufgabe zugrunde, eine bekannte Ventilanordnung derart weiterzubilden, dass diese nicht nur bei Anliegen eines definierten Drucks an der Druckseite öffnet, sondern dass auch abhängig von der Temperatur des Druckmediums ein Öffnen bzw. Schließen des Ventilkörpers erreichbar ist. Insbesondere dann, wenn das Druckmedium eine vergleichsweise höhere Temperatur aufweist, sollte die Ventilanordnung bei einem geringeren Druck öffnen, als dann, wenn das Druckmedium eine geringere Temperatur vorsieht.

Diese Aufgabe wird durch eine Ventilanordnung mit den Merkmalen des Anspruchs 1 gelöst. Der Ventilkörper sieht folglich einen der Druckseite zugewandten ersten Kolben und einen der Druckseite abgewandten, mit dem ersten Kolben einen Zwischenraum begrenzenden zweiten Kolben vor. Die wirksame Kolbenfläche des zweiten Kolbens ist dabei größer als die wirksame Kolbenfläche des ersten Kolbens. Der erste Kolben ist dabei insbesondere mit dem zweiten Kolben verbunden oder einstückig ausgebildet. Die Anordnung ist dabei so, dass bei Überschreiten eines an der Druckseite vorherrschenden oberen Grenzdrucks der Ventilkörper aufgrund des auf den ersten Kolben wirkenden Drucks in die Öffnungsstellung verlagert wird. Ferner ist ein temperaturabhängig schaltendes Stellglied vorgesehen, welches bei Überschreiten einer an der Druckseite vorherrschenden Grenztemperatur die Druckseite mit dem Zwischenraum verbindet. Dadurch wird erreicht, dass das Druckmedium nun auf den größeren, zweiten Kolben wirken kann, wobei aufgrund der größeren wirksamen Kolbenfläche der Ventilkörper nun bei Überschreiten eines geringeren, unteren Grenzdrucks geöffnet wird. Insofern wird erreicht, dass bei Vorherrschen oder Überschreiten der Grenztemperatur des Druckmediums die Ventilanordnung bei einem geringeren Druck des Druckmediums öffnet, als in dem Fall, wenn das Druckmedium eine geringere Temperatur als die Grenztemperatur aufweist.

Derartige Ventilanordnungen können beispielsweise als Bypassventile Verwendung finden, um das Druckmedium, sobald eine Grenztemperatur überschritten wird, aus beispielsweise einem Hauptströmungskanal in einen Bypasskanal zu leiten. Denkbar ist, dass derartigen Ventilanordnungen Kühlaggregate oder Filterstrukturen nachgelagert sind.

Das Stellglied kann dabei einen Verschlussabschnitt zum Verschließen einer in dem ersten Kolben vorgesehenen, die Druckseite mit dem Zwischenraum verbindenden Öffnung aufweisen. Dann, wenn der Verschlussabschnitt die Öffnung verschließt, ist die Druckseite vom Zwischenraum getrennt. Bei Erreichen der Grenztemperatur gibt der Verschlussabschnitt die Öffnung frei, wodurch die Druckseite mit dem Zwischenraum verbunden ist.

Ferner ist vorteilhaft, wenn das Stellglied einen mit der Druckseite korrespondierenden Steuerabschnitt zum Verlagern des Verschlussabschnitts bei Überschreiten der Grenztemperatur aufweist. Wird also die Grenztemperatur des Druckmediums an der Druckseite überschritten, so kann der Steuerabschnitt den Verschlussabschnitt zum Freigeben der Öffnung verlagern.

Vorteilhaft ist, wenn der Steuerabschnitt aus einer Formgedächtnislegierung ist, die bei Überschreiten der Grenztemperatur ihre Form derart ändert, dass der Verschlussabschnitt zur Freigabe der Öffnung verlagert wird. Formgedächtnislegierungen haben die Eigenschaft, dass sie ihre geometrische Form oder Struktur in Abhängigkeit von einer Temperatur ändern können. Die Formgedächtnislegierung kann dabei derart ausgestaltet sein, dass sie sich auf der Druckseite im Druckmedium befindet und dass sie bei Überschreiten der Grenztemperatur ihre Form zur Verlagerung des Verschlussabschnitts entsprechend ändert.

Der Steuerungsabschnitt kann dabei beispielsweise als Spiralfederabschnitt ausgebildet sein, der vorzugsweise bei einer Temperatur an der Druckseite, die unterhalb der Grenztemperatur ist, den Verschlussabschnitt in die Öffnung drängt, so dass diese sicher verschlossen ist. Bei Überschreiten der Grenztemperatur kann der Spiralfederabschnitt derart komprimiert werden bzw. sich zusammenziehen, dass der Verschlussabschnitt die Öffnung freigibt.

Zur funktionssicheren Anordnung des Ventilkörpers innerhalb der Ventilanordnung ist denkbar, dass ein Federelement vorgesehen ist, das in der Schließstellung den ersten Kolben gegen einen ersten Ventilsitz und/oder den zweiten Kolben gegen einen zweiten Ventilsitz drängt. Insbesondere dann, wenn das Stellglied einen als Spiralfederabschnitt ausgebildeten Steuerabschnitt aufweist ist die Anordnung derart, dass bei Überschreiten der Grenztemperatur der Steuerabschnitt gegen das Federelement wirkt, so dass zumindest der erste Kolben von dem ihm zugeordneten Ventilsitz abhebt.

Vorteilhafterweise ist der erste Kolben starr mit dem zweiten Kolben verbunden, so dass beide Kolben synchron bewegt werden und zeitgleich von ihren jeweiligen Ventilsitzen abheben.

Zur Führung des Ventilkörpers ist denkbar, dass ein in die Druckseite ragender Ventilkäfig vorgesehen ist. Der Ventilkäfig kann dabei eine Innenoberfläche aufweisen, welche mit einer Führungsfläche des Ventilkörpers zur axialen Verlagerung des Ventilkörpers zusammenwirkt.

Der Ventilkörper als solcher kann auch einen Führungsabschnitt zur Führung des Stellglieds aufweisen. Dadurch ergibt sich eine vergleichsweise kompakte Ausführungsform.

Ferner kann zur Abstützung des Stellglieds zwischen der dem Zwischenraum zugewandten Seite des zweiten Kolbens und dem Stellglied eine Stützfeder vorgesehen sein. Die Stützfeder drängt dabei vorzugsweise das Stellglied, bzw. dessen Verschlussabschnitt, in die insbesondere am Ventilkörper, bzw. des ersten Kolbens des Ventilkörpers vorgesehene Öffnung. Bei Überschreiten der Grenztemperatur wird das Stellglied dann entgegen der Federkraft der Stützfeder zur Freigabe der Öffnung in seine Öffnungslage gedrängt.

Die eingangs genannte Aufgabe wird auch gelöst durch ein Verfahren zum Betreiben einer Ventilanordnung, insbesondere einer erfindungsgemäßen Ventilanordnung. Das Verfahren kennzeichnet sich dadurch, dass bei Überschreiten eines an der Druckseite vorherrschenden oberen Grenzdrucks der Ventilkörper in die Öffnungsstellung verlagert wird und dass bei Überschreiten einer an der Druckseite vorherrschenden Grenztemperatur die Druckseite mit dem Zwischenraum verbunden wird, so dass das Druckmedium auf den zweiten Kolben wirkt und der Ventilkörper bei Überschreiten eines geringeren, unteren Grenzdrucks geöffnet wird. Der Schaltdruck, bei welchem die Ventilanordnung öffnet, ist also abhängig von der Temperatur des Druckmediums.

Weitere Einzelheiten und vorteilhafte Ausgestaltungen der Erfindung sind der nachfolgenden Beschreibung zu entnehmen, anhand derer ein Ausführungsbeispiel der Erfindung näher beschrieben und erläutert ist.

Es zeigen:
Figur 1 eine perspektivische Ansicht einer Ventilanordnung;
Figur 2 einen Längsschnitt durch die Ventilanordnung nach Figur 1;
Figur 3 einen weiteren Längsschnitt durch die Ventilanordnung gemäß Figur 1;
Figur 4 einen Längsschnitt durch die Ventilanordnung gemäß Figur 1, bei der der Ventilkörper in der Öffnungsstellung ist;
Figur 5 die Ventilanordnung gemäß Figur 1 mit geöffnetem Stellglied; und
Figur 6 die Ventilanordnung in Explosionsdarstellung.

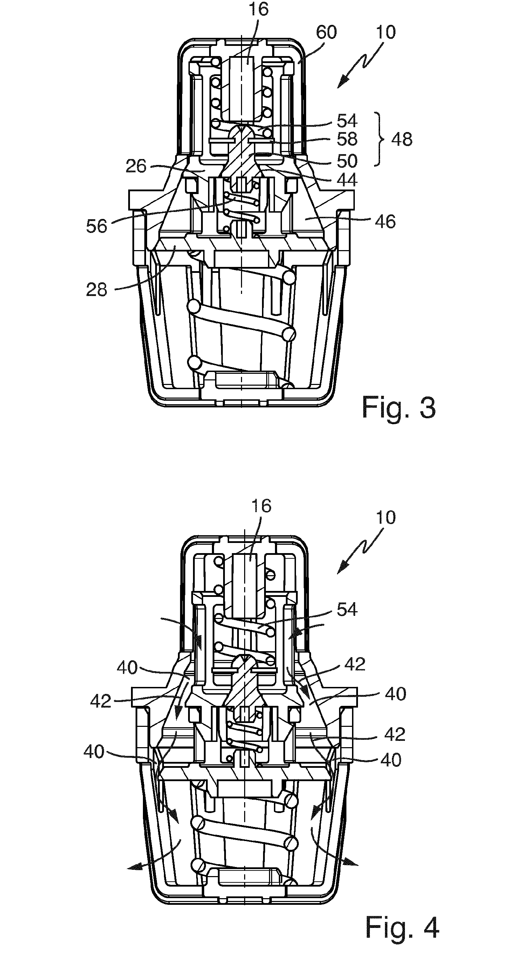

Die in den Figuren gezeigte Ventilanordnung 10 umfasst einen Ventilkörper 12, der in einem Ventilgehäuse 14 entlang der in den Figuren 3, 4 und 5 gezeigten Mittellängsachse 16 verlagerbar ist.

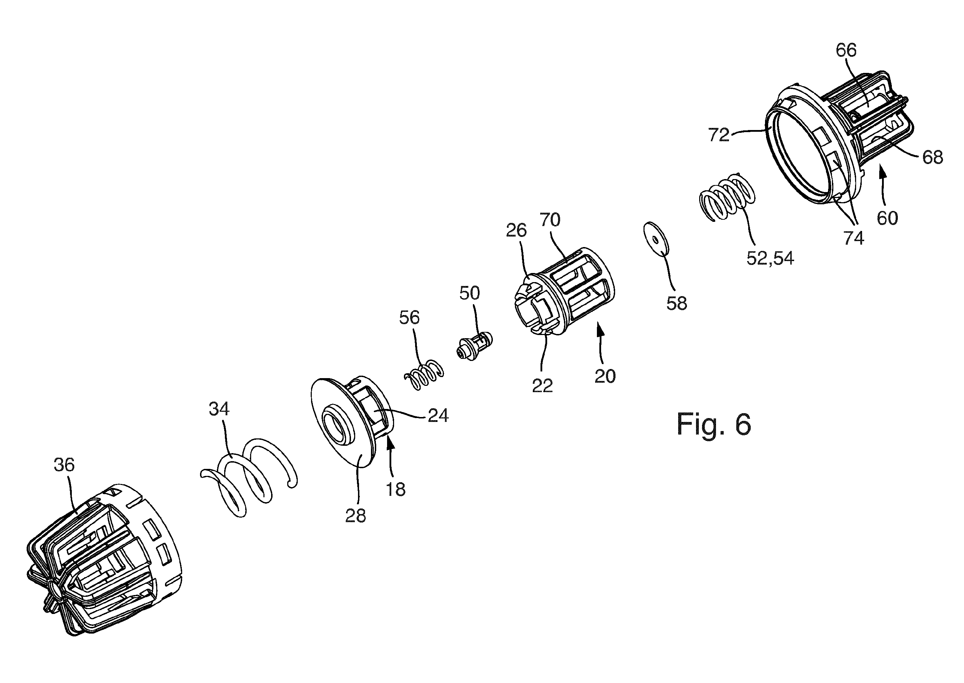

Der Ventilkörper 12 besteht dabei aus einem Unterteil 18 und einem Oberteil 20, die in der Figur 6 deutlich zu erkennen sind. Das Unterteil 18 ist dabei mit dem Oberteil 20 durch am Oberteil 20 vorgesehene Rastnasen 22, die in am Unterteil 18 vorgesehene Rastaussparungen 24 eingreifen, fest verrastet.

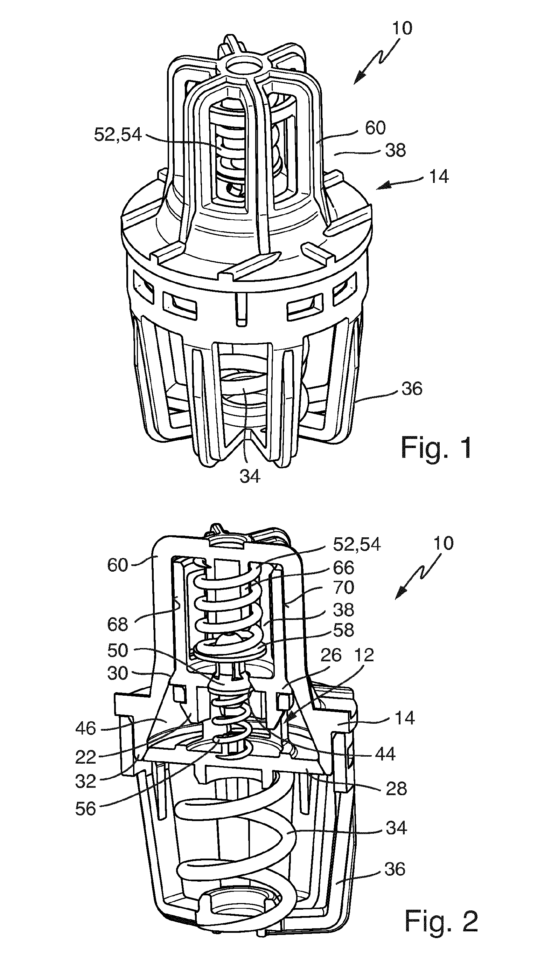

Wie aus den Schnitten gemäß Figur 2 bis 5 deutlich wird, umfasst der Ventilkörper 12 einen ersten Kolben 26 und einen zweiten Kolben 28. Der erste Kolben 26 ist dabei am Oberteil 20 des Ventilkörpers 12 und der zweite Kolben 28 am Unterteil 18 des Ventilkörpers 12 vorgesehen.

Der Ventilkörper 12 ist in seiner Schließstellung, die in den Schnitten gemäß Figur 2 und 3 gezeigt ist derart im Ventilgehäuse 14 angeordnet, dass der erste Kolben 26 dicht an einem ihm zugeordneten Ventilsitz 30 und der zweiten Kolben 28 dicht an einem ihm zugeordneten Ventilsitz 32 anliegt. Der Ventilkörper 12 bzw. die beiden Kolben 26, 28 werden dabei von einem Federelement 34 in die Schließstellung gedrängt.

Das Federelement 34 stützt sich dabei einerends an dem zweiten Kolben 28 und andererends an einem von dem Druckmedium durchströmbaren Käfig 36 des Ventilgehäuses 14 ab.

Der erste Kolben 26 ist bei verbauter Ventilanordnung der Druckseite 38 des Druckmediums zugewandt, so dass dieser Druck der Druckseite 38 auf die wirksame Fläche des Kolbens 26 wirkt. Bei Überschreiten eines oberen Grenzdrucks P₂ wird folglich aufgrund des auf die wirksame Fläche des Kolbens 26 wirkende Drucks der Ventilkörper 12 entgegen der Federkraft des Federelements 34 aus der Schließstellung in die Öffnungsstellung, wie sie in Figur 4 gezeigt ist, gedrängt. Folglich kann dann Druckmedium von der Druckseite 38 durch die sich ergebenden, zwischen den Ventilsitzen 30, 32 und den jeweils zugehörigen Kolben 26, 28 vorgesehenen Spalte 40 hindurchfließen, was durch die Pfeile 42 in Figur 4 angedeutet ist.

Wie ebenfalls aus den in den Figuren gezeigten Schnitten deutlich wird, weist der erste Kolben 26 eine Öffnung 44 auf, die einen zwischen den beiden Kolben 26 und 28 liegenden Zwischenraum 46 mit der Druckseite 38 verbindet. Diese Öffnung 44 ist in den Figuren 2, 3 und 4 durch ein Stellglied 48 verschlossen. Wie aus insbesondere Figur 3 deutlich wird, umfasst das Stellglied 48 einen in die Öffnung 44 ragenden Verschlussabschnitt 50. Das Stellglied 48 umfasst zudem einen Steuerabschnitt 52 in Form einer Spiralfeder 54, die aus einer Formgedächtnislegierung hergestellt ist.

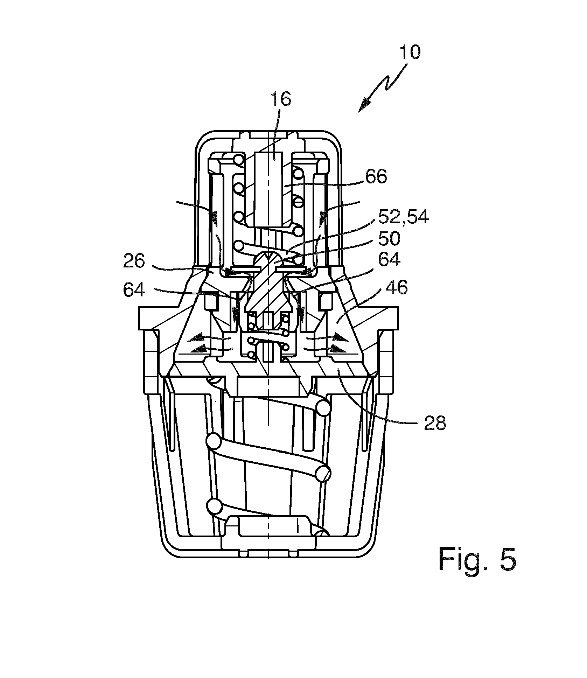

Zur Abstützung des Verschlussabschnitts 50 ist zudem eine Stützfeder 56 vorgesehen, die zwischen dem zweiten Kolben 28 und dem Verschlussabschnitt 50 angeordnet ist und den Verschlussabschnitt 50 in seine Verschlusslage drängt. Der kolbenartig ausgebildete Verschlussabschnitt ist dabei entlang der Mittellängsachse 16 aus der in Figur 3 gezeigten Verschlusslage in eine in Figur 5 gezeigte Öffnungslage verlagerbar.

Dadurch, dass der Steuerabschnitt 52 bzw. die Spiralfeder 54 auf der Druckseite 38 angeordnet ist, und im Betrieb der Ventilanordnung 10 vom Druckmedium umströmt wird, erwärmt sich die Spiralfeder 54 entsprechend der Temperatur des Druckmediums. Die Formgedächtnislegierung der Spiralfeder 54 ist dabei so gewählt, dass beim Überschreiten einer definierbaren Grenztemperatur die Spiralfeder 54 ihre Form derart ändert, dass sie den Verschlussabschnitt 50 aus der in Figur 3 gezeigten Verschlusslage in die in Figur 5 gezeigte Öffnungslage verlagert. Zur Kraftübertragung zwischen der Spiralfeder 54 und dem Verschlussabschnitt 50 ist am Verschlussabschnitt 50 eine Scheibe 58 vorgesehen, die von dem den Verschlussabschnitt 50 zugewandten Ende der Spiralfeder 54 beaufschlagt wird. Auf der der Scheibe 58 abgewandten Seite stützt sich die Spiralfeder 54 an einem gehäuseseitigen Ventilkäfig 60 ab, der vom Druckmedium durchströmt wird.

Zur Führung der Spiralfeder 54 weist der Ventilkäfig 60 um die Mittellängsachse 16 einen hin zum ersten Kolben 26 gewandten, zylindrischen Führungsabschnitt 66 auf. Zudem weist der Ventilkäfig 60 an seinem Innenumfang Führungsflächen 68 auf, die zur axialen Führung eines Führungsabschnitts 70 des Ventilkörpers 12 dienen.

Der Käfig 36 ist dabei mit dem Ventilkäfig 60 über einen umlaufenden Bund 72 und daran vorgesehenen Rastnasen 74 verrastet.

Überschreitet nun das Druckmedium eine Grenztemperatur, dann wird, wie beschrieben, der Verschlussabschnitt 50, wie in Figur 5 gezeigt, von der Spiralfeder 54 in die Öffnungslage verlagert. Dies hat zur Folge, dass Druckmedium nun durch den in der Öffnung 44 vorhandenen Spalt 40 in den Zwischenraum 46 strömen kann, was in der Figur 5 durch die Pfeile 64 angedeutet ist.

Dies wiederum hat zur Folge, dass nun der im Druckmedium herrschende Druck auf die wirksame Kolbenfläche des Kolbens 28 wirkt, die größer ist als die wirksame Kolbenfläche des Kolbens 26. Aufgrund der größeren Kolbenfläche des Kolbens 28 wird ein Verlagern des Ventilkörpers 12 in die Öffnungsstellung bei einem unteren Grenzdruck P₁ bewirkt, der geringer ist als der obere Grenzdruck P₂. Insofern schaltet die Ventilanordnung 10 bei Erreichen oder Überschreiten der Grenztemperatur bereits bei einem geringeren Druck P₁ in die Öffnungsstellung, als in dem Fall, in dem die Grenztemperatur unterschritten ist.

Insgesamt ergibt sich dadurch eine Ventilanordnung 10, die bei zwei Schaltdrücken, und zwar in Abhängigkeit von der Temperatur des Druckmediums, in die Öffnungsstellung schaltet.

## Patentansprüche

1. Ventilanordnung (10) mit einer von einem Druckmedium anströmbaren Druckseite (38), und mit einem zwischen einer Schließstellung und einer Öffnungsstellung verlagerbaren Ventilkörper (12), **dadurch gekennzeichnet,**
**dass** der Ventilkörper (12) einen der Druckseite (38) zugewandten ersten Kolben (26) und einen der Druckseite (38) abgewandten, mit dem ersten Kolben (26) einen Zwischenraum (46) begrenzende zweiten Kolben (28) aufweist, wobei die Kolbenfläche des zweiten Kolbens (28) größer ist als die Kolbenfläche des ersten Kolbens (26),
**dass** bei Überschreiten eines an der Druckseite vorherrschenden oberen Grenzdrucks (P₂) der Ventilkörper (12) in die Öffnungsstellung verlagert wird, und
**dass** ein temperaturabhängig schaltendes Stellglied (48) vorgesehen ist, das bei Überschreiten einer an der Druckseite (38) vorherrschenden Grenztemperatur die Druckseite (38) mit dem Zwischenraum (46) verbindet, so dass das Druckmedium auf den zweiten Kolben (28) wirkt und der Ventilkörper (12) bei Überschreiten eines geringeren, unteren Grenzdrucks (P₁) geöffnet wird.

2. Ventilanordnung (10) nach Anspruch 1, **dadurch gekennzeichnet, dass** das Stellglied (48) einen Verschlussabschnitt (50) zum Verschließen einer in dem ersten Kolben (26) vorgesehenen, die Druckseite (38) mit dem Zwischenraum (46) verbindenden Öffnung (44) aufweist.

3. Ventilanordnung (10) nach Anspruch 2, **dadurch gekennzeichnet, dass** das Stellglied (48) einen mit der Druckseite (38) korrespondierenden Steuerabschnitt (52) zum Verlagern des Verschlussabschnitts (50) bei Überschreiten der Grenztemperatur aufweist.

4. Ventilanordnung (10) nach Anspruch 3, **dadurch gekennzeichnet, dass** der Steuerabschnitt (52) aus einer Formgedächtnislegierung ist, die bei Überschreiten der Grenztemperatur ihre Form derart ändert, dass der Verschlussabschnitt (50) zur Freigabe der Öffnung (44) verlagert wird.

5. Ventilanordnung (10) nach Anspruch 4, **dadurch gekennzeichnet, dass** der Steuerabschnitt (52) als Spiralfederabschnitt (54) ausgebildet ist.

6. Ventilanordnung (10) nach einem der vorhergehenden Ansprüche, **dadurch gekennzeichnet, dass** ein Federelement (34) vorgesehen ist, dass in der Schließstellung den ersten Kolben (26) gegen einen ersten Ventilsitz (30) und/oder den zweiten Kolben (28) gegen einen zweiten Ventilsitz (32) drängt.

7. Ventilanordnung (10) nach einem der vorhergehenden Ansprüche, **dadurch gekennzeichnet, dass** ein in die Druckseite (38) ragender, den Ventilkörper (12) führender Ventilkäfig (60) vorgesehen ist.

8. Ventilanordnung (10) nach einem der vorhergehenden Ansprüche, **dadurch gekennzeichnet, dass** der Ventilkörper (12) einen Führungsabschnitt (66) zur Führung des Stellglieds (48) aufweist.

9. Ventilanordnung (10) nach einem der vorhergehenden Ansprüche, **dadurch gekennzeichnet, dass** zur Abstützung des Stellglieds (48) zwischen der dem Zwischenraum (46) zugewandten Seite des zweiten Kolbens (28) und dem Stellglied (48) eine Stützfeder (56) vorgesehen ist.

10. Verfahren zum Berteiben einer Ventilanordnung, insbesondere einer Ventilanordnung (10) nach einem der vorhergehenden Ansprüche, wobei die Ventilanordnung (10) einen zwischen einer Schließstellung und einer Öffnungsstellung verlagerbaren Ventilkörper (12) aufweist, der einen einer Druckseite zugewandten ersten Kolben (26) und einen der Druckseite abgewandten, mit den Kolben (26) einen Zwischenraum (46) begrenzende zweiten Kolben (28) aufweist, **dadurch gekennzeichnet, dass** bei Überschreiten eines an der Druckseite vorherrschenden oberen Grenzdrucks der Ventilkörper (12) in die Öffnungsstellung verlagert wird, und dass bei Überschreiten einer an der Druckseite vorherrschenden Grenztemperatur die Druckseite mit dem Zwischenraum (46) verbunden wird, so dass das Druckmedium auf den zweiten Kolben (28) wirkt und der Ventilkörper (12) bei Überschreiten eines geringeren, unteren Grenzdrucks geöffnet wird.
